# EUROPEAN PATENT APPLICATION

(11) **EP 4 657 193 A1**
(43) Date of publication of application: **03.12.2025**
(21) Application number: 25176017.9
(22) Date of filing: 13.05.2025
(51) Int. Cl.: G05B 23/02, G06N 3/08, G06Q 10/20, G07C 3/00

(54) **MOTOR HEALTH MONITORING TECHNIQUES**

(30) Priority: 30.05.2024 US 202418677930
(71) Applicant: Honeywell International Inc., Charlotte, NC 28202 (US)
(72) Inventor: SHAH, Jasmin, Charlotte, 28202 (US); UPADHYA, Karthik Prabodh, Charlotte, 28202 (US); BANDODEKAR, Mandar, Charlotte, 28202 (US)
(74) Representative: Haseltine Lake Kempner LLP

(57) **Abstract**

Approaches for monitoring health of a motor, are described. According to one example, a motor health monitoring unit may be provided. The motor health monitoring unit may receive sensor data, measured at a particular time, in relation to the motor. The sensor data may include a corresponding value of one or more operating parameters from amongst a plurality of operating parameters associated with the motor. The sensor data may be processed to detect an anomaly in relation to an operating parameter of the one or more operating parameters. Upon detecting the anomaly, an operating condition of the motor at the particular time may be identified. The sensor data and the operating condition may be processed to generate an anomaly interpretation indicative of the anomaly in the operating parameter during the operating condition. The anomaly interpretation may be used for predicting a specific maintenance requirement for the motor.

## Description

### BACKGROUND

Motors, such as AC motors, have a wide range of applications in daily life and in industrial operations. For example, a motor may be used to run pumps, water heaters, fans, ovens, conveyer belts, etc. A motor typically has a pre-defined lifespan assigned thereto by a manufacturer of the motor. However, during real-time operation of the motor, various factors, such as alignment issues and temperature variations, affect the health of the motor, leading to reduction in the life span of the motor. Degradation of the motor may affect or disrupt such daily life or industrial operations. Hence, it is important to monitor the health of the motor for regular servicing to prevent such disruptions and possible complete failure of the motor. Various motor health monitoring techniques have thus been developed over time for detecting degradation of the health of the motor.

### BRIEF DESCRIPTION OF FIGURES

Systems and/or methods are now described, in accordance with examples of the present subject matter and with reference to the accompanying figures, in which:
FIG. 1 illustrates a computing environment for monitoring health of a motor, according to an example;
FIG. 2 illustrates a computing environment implementing a motor health monitoring system for monitoring health of a motor, according to an example;
FIG. 3A to FIG. 3C illustrate different training techniques to obtain a pre-trained motor health monitoring model for monitoring health of a motor, according to an example;
FIG. 4 illustrates a method for monitoring health of a motor, according to an example;
FIG. 5 illustrates a method for pre-processing historical sensor data for being used during training of a pre-trained motor health monitoring model for monitoring health of a motor, according to an example;
FIG. 6 illustrates a training method for obtaining the pre-trained motor health monitoring model for monitoring health of the motor utilizing the pre-processed historical sensor data, according to an example;
FIG. 7 illustrates a training method for obtaining the pre-trained motor health monitoring model for monitoring health of the motor utilizing the pre-processed historical sensor data, according to another example;
FIG. 8 illustrates a training method for obtaining the pre-trained motor health monitoring model for monitoring health of the motor utilizing the pre-processed historical sensor data, according to yet another example;
FIG. 9 illustrates a method for monitoring health of a motor utilizing a pre-trained motor health monitoring model, according to an example; and
FIG. 10 illustrates a computing environment implementing a non-transitory computer readable medium for detecting hydrogen leakage in a hydrogen amenity, according to an example.

### DETAILED DESCRIPTION

With advancement in technology, motor health monitoring techniques have been developed for detecting degradation of the health of a motor. Such conventional motor health monitoring techniques involve use of sensors for sensing motor data when the motor is running. Examples of the motor data may include temperature, acceleration, and vibration. The sensed motor data may be collected and analyzed to detect anomalies in the sensed motor data. For example, the sensed motor data may be collected for a month and anomalies such as instances of high vibration, elevated temperature, and rapid acceleration changes may be detected in the sensed motor data.

In the conventional motor health monitoring techniques, upon detecting the anomalies in the sensed motor data, an anomaly interpretation and an actionable insight may be provided to a user. The anomaly interpretation may simply state the number of anomalies detected in the past month. For instance, the anomaly interpretation may be "The motor's health is degrading due to a total of 15 anomalies detected in the past month, including instances of high vibration, elevated temperature, and rapid acceleration changes". Further, the actionable insight may simply recommend the user to inspect the motor and other components operating with the motor. For instance, the actionable insight may be "It is recommended to perform a general inspection of the motor, its control systems, and mechanical components to identify potential issues and implement appropriate maintenance actions".

However, such anomaly interpretation and actionable insight provide a very broad overview of the detected anomalies and thus does not help the user to identify the underlying cause of the degradation of the motor's health. In other words, such anomaly interpretation and actionable insight are less targeted and less effective in addressing the underlying cause of the degradation of the motor's health. Hence, the user may have to inspect the motor completely to identify the underlying cause of the degradation. The user may also have to inspect all other components that are connected to the motor to identify the underlying cause of the degradation. In order to inspect the motor and the other components, the user may have to instantly pause the operation of the motor and the other components. This may lead to unscheduled and long equipment downtime. In an industrial setting, such unscheduled and long equipment downtime may result in a huge monetary loss. Thus, it is important to perform focused inspection and servicing of the motor.

Approaches for monitoring the health of a motor are described. In an example, the motor may be an AC motor. The present subject matter facilitates in providing accurate and focussed interpretation of anomalies detected in a motor, enabling the user to perform servicing of the motor in a short duration. In one example, for generating an accurate anomaly interpretation, sensor data recorded for a motor may be used. The sensor data may be received in relation to the motor from one or more sensor units installed proximate to the motor. The sensor data may be measured by the one or more sensor units at a particular time. The sensor data may include a corresponding value of one or more operating parameters from amongst a plurality of operating parameters associated with the motor. Examples of the plurality of operating parameters may include a temperature value of the motor, a vibration value of the motor, an acceleration value of the motor, and a motor operating status. The motor operating status may indicate whether the motor is on or off at the particular time.

Subsequently, the sensor data may be processed, utilizing a pre-trained motor health monitoring model, to detect an anomaly in relation to an operating parameter of the one or more operating parameters. Examples of the anomaly may include, but are not limited to, excessive vibration, consistently high temperature, and sudden high acceleration. Upon detecting the anomaly, an operating condition of the motor at the particular time may be identified utilizing the pre-trained motor health monitoring model. In an example, the operating condition of the motor may be indicative of whether the motor was in a transient operation or a steady-state operation at the particular time. The motor may be said to operate in the transient operation when the particular time lies in a short period of time immediately after the motor operating status changes from ON to OFF or from OFF to ON. The motor may be said to operate in the steady-state operation when the particular time lies in a time other than the short period of time while the motor is operating. In an example, the operating condition of the motor may be indicative of whether the motor was operating or not at the particular time.

Subsequently, the sensor data and the operating condition may be processed, utilizing the pre-trained motor health monitoring model, to generate an anomaly interpretation for presenting to a user. The anomaly interpretation may be indicative of the anomaly in the operating parameter during the operating condition. The anomaly interpretation may be used for predicting a specific maintenance requirement for the motor. The present subject matter specifically provides information to the user about the degradation of the motor's health in terms of the operating parameter in which the anomaly is detected and the conditions under which such anomaly is detected. Thus, a simple and robust methodology is provided for generating accurate and focussed anomaly interpretation which can be easily utilized by the user to identify the underlying cause of the degradation of the motor's health.

In an example, prior to generating the anomaly interpretation, an operating condition tag may be assigned to the sensor data from amongst a plurality of pre-defined operating condition tags. The operating condition tag may be assigned based on the operating condition. Each of the plurality of pre-defined operating condition tags may be indicative of a unique operating condition associated with the motor. For example, when the motor is facing abnormal variations in the vibration value while operating in the steady-state operation, an example operating condition tag that may be assigned to the sensor data may be "steady-state operation with variable vibration". Similarly, different operating condition tags may be defined for different operating conditions of the motor.

By assigning the operating condition tag to the sensor data, the anomaly interpretation may be specified in terms of the operating condition tag. For instance, an example of the anomaly interpretation may be "The motor's health is degrading due to excessive vibration during transient operation.". Tying the primary operating parameter which is resulting in degradation with the operating condition of the motor may enable the user to easily and accurately understand the underlying cause of the degradation of the motor and predict the specific maintenance requirement for the motor.

In an example, the anomaly interpretation may be processed, utilizing the pre-trained motor health monitoring model, to generate a maintenance recommendation for presenting to the user. The maintenance recommendation may include the specific maintenance requirement for the motor. For instance, for an example anomaly interpretation "The motor's health is degrading due to excessive vibration during transient operation", an example maintenance recommendation may be "Consider inspecting the motor for misalignment or bearing issues".

Another example of the anomaly interpretation may be "The motor's health is deteriorating because of consistently high temperatures during steady-state operation with constant acceleration". In this case, an example maintenance recommendation may be "There may be a cooling issue, and it is recommended to inspect the cooling system or ventilation".

Another example of the anomaly interpretation may be "The motor's health is affected by a pattern of off-state operations followed by sudden high acceleration, which could cause unnecessary stress on the motor components". In this case, an example maintenance recommendation may be "Reviewing the motor's usage patterns and implementing a more gradual acceleration process after off-states is recommended".

According to the described approaches, the sensor data is not only sensed when the motor is ON, but the sensor data is also sensed when the motor is OFF. Moreover, the sensor data is segmented based on the operating condition of the motor at the time when the sensor data is sensed. Thus, the present subject matter efficiently understands the intricate relationship between the operating parameters and all the operating conditions associated with the motor. Further, the present subject matter efficiently links the operating parameters and the operating condition with an underlying cause of the anomaly. As a result, the present subject matter specifically provides information to the user about the degradation of the motor's health in terms of the operating parameter in which the anomaly is detected and the conditions under which such an anomaly is detected. Thus, an accurate and focussed anomaly interpretation may be generated which can be easily utilized by the user to identify the underlying cause of the degradation of the motor's health. Tying the primary operating parameter which is resulting in degradation with the operating condition of the motor may enable the user to easily and accurately understand the underlying cause of the degradation of the motor and predict the specific maintenance requirement for the motor. In addition to the anomaly representation, the present subject matter may also provide an accurate recommendation to the user about which component may be inspected or what changes may be made to the operating parameters to increase the remaining useful life of the motor. As a result, the present subject matter leads to reduced equipment downtime, optimized maintenance scheduling, and cost savings for businesses relying on motors.

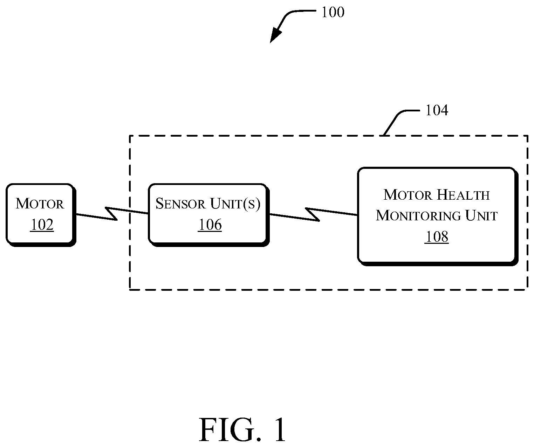

The present subject matter is further described with reference to FIG. 1 to FIG. 10. It should be noted that the description and figures merely illustrate principles of the present subject matter. Various arrangements may be devised that, although not explicitly described or shown herein, encompass the principles of the present subject matter. Moreover, all statements herein reciting principles, aspects, and examples of the present subject matter, as well as specific examples thereof, are intended to encompass equivalents thereof.

FIG. 1 illustrates a block diagram of a computing environment 100 for monitoring health of a motor 102, according to an example. In one example, the computing environment 100 may include the motor 102 and a motor health monitoring system 104. In an example, the motor 102 may be an AC motor. The motor 102 may be used for a wide range of applications in daily life and in industrial operations. For example, the motor 102 may be used to run pumps, water heaters, fans, ovens, conveyer belts, etc. The motor health monitoring system 104 may be used to monitor the health of the motor 102. The motor health monitoring system 104 may hereinafter be alternatively referred to as system 104. In one example, the system 104 may be a distributed computing system having one or more physical computing systems geographically distributed at same or different locations. In another example, one or more components of the system 104 may be hosted virtually, for example, on a cloud-based platform, while other components may be co-located with the motor 102. In yet another example, the system 104 may be a stand-alone system and may be co-located with the motor 102 inside a premises housing the motor 102. In yet another example, the motor 102 and some components of the system 104 may be located at different locations.

The system 104 may include one or more sensor unit(s) 106 and a motor health monitoring unit 108. The one or more sensor unit(s) 106 may be individually referred to as a sensor unit 106 and collectively referred to as sensor units 106. The sensor units 106 and the motor 102 may be communicatively coupled to each other. In an example, the sensor units 106 may be externally coupled with the motor 102. In another example, the motor 102 may be a sensorized motor having inbuilt sensor units 106.

In one example, the motor health monitoring unit 108 may be hosted virtually, for example, on a cloud-based platform at the premises including the motor 102 or away from the premises. In another example, the motor health monitoring unit 108 may be a stand-alone physical system geographically located either on the premises or away from the premises. The sensor units 106 and the motor health monitoring unit 108 may be communicably coupled with each other. The sensor units 106 may be configured to sense values of various operating parameters of the motor 102. The motor health monitoring unit 108 may receive such values from the sensor units 106 and analyze the values to monitor the health of the motor 102.

In operation, the sensor units 106 may be configured to sense sensor data in relation to the motor 102. In an example, the sensor units 106 may be configured to sense the sensor data in real-time. In an example, the sensor data may include a corresponding value of one or more operating parameters from amongst a plurality of operating parameters associated with the motor 102. Examples of the plurality of operating parameters may include, but are not limited to, a temperature value of the motor 102, a vibration value of the motor 102, an acceleration value of the motor 102, and a motor operating status. Examples of the plurality of operating parameters may include, but are not limited to, an operating voltage value associated with the motor 102 and an operating current value associated with the motor 102. The sensor data may be measured by the sensor units 106 at a particular time.

The sensor units 106 may transmit the sensor data to the motor health monitoring unit 108. In an example, the sensor units 106 may transmit the sensor data to the motor health monitoring unit 108 periodically. Upon receiving the sensor data, the motor health monitoring unit 108 may implement a pre-trained motor health monitoring model to process the sensor data to detect an anomaly in relation to an operating parameter of the one or more operating parameters. Examples of the anomaly may include, but are not limited to, excessive vibration, consistently high temperature, and sudden high acceleration.

The pre-trained motor health monitoring model may be obtained after training on historical sensor data associated with one or more previously operated motors. Each previously operated motor of the one or more previously operated motors may be associated to a corresponding health degradation cause. The corresponding health degradation cause may indicate an issue that was historically faced by the previously operated motor. For example, the previously operated motor may have had cooling issues, alignment issues, bearing issues, etc. The historical sensor data may include corresponding values of the plurality of operating parameters recorded at the time of occurrence of the corresponding health degradation cause. Thus, by training on the historical sensor data, the pre-trained motor health monitoring model may be able to form a correlation between the corresponding health degradation cause, the historical operating condition at the time of the corresponding health degradation cause, and the historical sensor data. As a result, the pre-trained motor health monitoring model may be implemented by the motor health monitoring unit 108 to detect the anomaly in relation to the operating parameter.

Upon detecting the anomaly, the motor health monitoring unit 108 may identify an operating condition of the motor 102 at the particular time. In an example, the operating condition of the motor 102 may be indicative of whether the motor 102 was operating or not at the particular time. Further, the operating condition of the motor 102 may be indicative of whether the motor 102 was in a transient operation or a steady-state operation while the motor 102 was operating at the particular time. The motor 102 may be said to operate in the transient operation when the particular time lies in a short period of time immediately after the motor operating status changes from ON to OFF or from OFF to ON. The motor 102 may be said to operate in the steady-state operation when the particular time lies in a time other than the short period of time while the motor 102 is operating.

Subsequently, the motor health monitoring unit 108 may assign an operating condition tag, from amongst a plurality of pre-defined operating condition tags, to the sensor data. The operating condition tag may be assigned based on the operating condition. Each of the plurality of pre-defined operating condition tags may be indicative of a unique operating condition associated to the motor 102. In an example, the plurality of pre-defined operating condition tags may be pre-configured based on the plurality of operating parameters. The plurality of pre-defined operating condition tags may thus be decided based on the operating parameters which are sensed for a particular motor. For example, when the operating parameters that are sensed for a motor are the temperature value, the vibration value, the acceleration value, and the motor operating status, examples of the plurality of pre-defined operating condition tags may include, but are not limited to, a baseline behaviour, a steady-state operation with variable temperature, a steady-state operation with variable vibration, a steady-state operation with variable acceleration, a transient operation with changes in the motor operating status, and a transient operation with simultaneous changes in temperature, vibration, and acceleration.

The baseline behavior may indicate that the motor is not operating. The steady-state operation with variable temperature may indicate that the motor is in the steady-state operation and has abnormal variations in the temperature value. The steady-state operation with variable vibration may indicate that the motor is in the steady-state operation and has abnormal variations in the vibration value. The steady-state operation with variable acceleration may indicate that the motor is in the steady-state operation and has abnormal variations in the acceleration value. The transient operation with changes in the motor operating status may indicate that the motor is in the transient operation due to change only in the motor operating status. The transient operation with simultaneous changes in temperature, vibration, and acceleration may indicate that the motor is in the transient operation and has abnormal variations in at least one of the temperature value, the vibration value, and the acceleration value.

Once the operating condition tag is assigned to the sensor data, the motor health monitoring unit 108 may process the sensor data and the operating condition tag to generate an anomaly interpretation for presenting to a user. The anomaly interpretation may be indicative of the anomaly in the operating parameter during the operating condition. The anomaly interpretation may be used for predicting a specific maintenance requirement for the motor 102. The anomaly interpretation may specifically provide information to the user about the degradation of the motor's health in terms of the operating parameter in which the anomaly is detected and the conditions under which such anomaly is detected. For instance, an example of the anomaly interpretation may be "The motor's health is degrading due to excessive vibration during transient operation.". Since the primary operating parameter which is resulting in degradation is tied with the operating condition of the motor 102, the user can easily and accurately understand the underlying cause of the degradation of the motor 102 and predict the specific maintenance requirement for the motor 102.

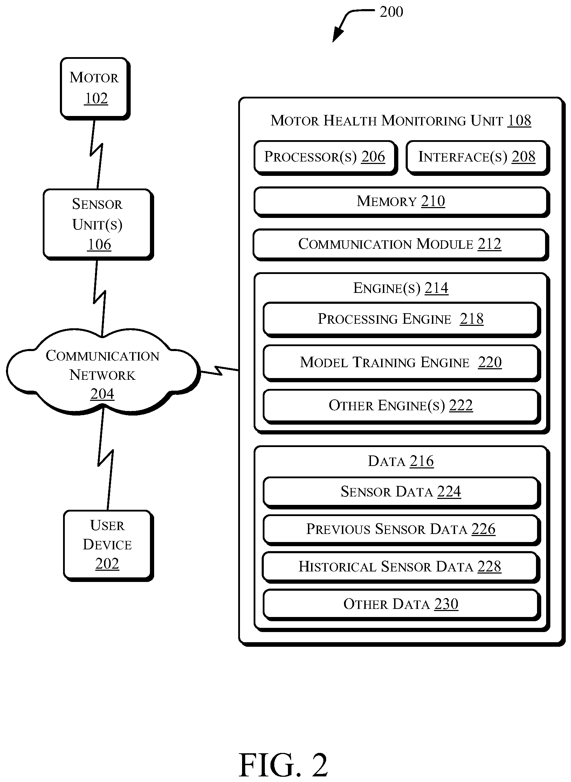

FIG. 2 illustrates a computing environment 200 implementing the system 104, according to an example. Although the system 104 has not been illustrated explicitly in FIG. 2, it is to be understood that the sensor unit(s) 106 and the motor health monitoring unit 108 are a part of the system 104, as explained with reference to FIG. 1. In one example, the computing environment 200 may include the motor 102, the sensor unit(s) 106 of the system 104, the motor health monitoring unit 108 of the system 104, and a user device 202. In one example, the user device 202 may be a device over which the motor health monitoring unit 108 may notify a user, such as a service technician, about the health of the motor 102. Examples of the user device 202 may include, but are not limited to, a mobile phone, a laptop, a tablet, and a personal digital assistant (PDA). Although one user device 202 has been illustrated in FIG. 2 for the sake of brevity, it should be understood to a person skilled in the art that any number of user devices 202 may be connected with the motor health monitoring unit 108 to receive update about the health of the motor.

The sensor units 106, the motor health monitoring unit 108, and the user device 202 may be communicably coupled with each other over a communication network 204 and may exchange data and signals over the communication network 204. The communication network 204 may be a wireless network, a wired network, or a combination thereof. The communication network 204 may also be an individual network or a collection of many such individual networks, interconnected with each other and functioning as a single large network, e.g., the Internet or an intranet. Examples of such individual networks include local area network (LAN), wide area network (WAN), the internet, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), Public Switched Telephone Network (PSTN), and Integrated Services Digital Network (ISDN).

Depending on the technology, the communication network 204 may include various network entities, such as transceivers, gateways, and routers. In an example, the communication network 204 may include any communication network that uses any of the commonly used protocols, for example, Hypertext Transfer Protocol (HTTP), and Transmission Control Protocol/Internet Protocol (TCP/IP). The sensor units 106, the motor health monitoring unit 108, and the user device 202 may thus be communicably coupled with each other over the communication network 204 and may exchange data and signals.

In one example, the motor health monitoring unit 108 may include processor(s) 206, interface(s) 208, memory 210, a communication module 212, engine(s) 214, and data 216. The motor health monitoring unit 108 may include components, other than the depicted components, such as display, input/output interfaces, operating systems, applications, and other software or hardware components (not shown in the figures).

The processor(s) 206 may be implemented as microprocessors, microcomputers, microcontrollers, digital signal processors, central processing units, state machines, logic circuitries, and/or other devices that manipulate signals based on operational instructions. The interface(s) 208 may allow the connection or coupling of the motor health monitoring unit 108 with one or more other devices, such as the sensor units 106 and the user device 202, through a wired (e.g., Local Area Network, i.e., LAN) connection or through a wireless connection (e.g., Bluetooth^{®}, Wi-Fi). The interface(s) 208 may also enable intercommunication between different logical as well as hardware components of the motor health monitoring unit 108.

The memory 210 may be a computer-readable medium, examples of which include volatile memory (e.g., RAM), and/or non-volatile memory (e.g., Erasable Programmable read-only memory, i.e., EPROM, flash memory, etc.). The memory 210 may be an external memory or an internal memory, such as a flash drive, a compact disk drive, an external hard disk drive, or the like. The memory 210 may further include the data 216 and/or other data which may either be received, utilized, or generated during the operation of the motor health monitoring unit 108.

The communication module 212 may be a wireless communication module. Examples of the communication module 212 may include, but are not limited to, Global System for Mobile communication (GSM) modules, Code-division multiple access (CDMA) modules, Bluetooth modules, network interface cards (NIC), Wi-Fi modules, dial-up modules, Integrated Services Digital Network (ISDN) modules, Digital Subscriber Line (DSL) modules, and cable modules. In one example, the communication module 212 may also include one or more antennas to enable wireless transmission and reception of data and signals. The communication module 212 may allow the motor health monitoring unit 108 to transmit data and signals to one or more other devices, such as the sensor units 106 and the user device 202; and receive data and signals from the one or more other devices.

The engine(s) 214 may be implemented as a combination of hardware and programming, for example, programmable instructions to implement a variety of functionalities of the engine(s) 214. In examples described herein, such combinations of hardware and programming may be implemented in several different ways. For example, the programming for the engine(s) 214 may be executable instructions. Such instructions may be stored on a non-transitory machine-readable storage medium which may be coupled either directly with the motor health monitoring unit 108 or indirectly (for example, through networked means). In an example, the engine(s) 214 may include a processing resource, for example, either a single processor or a combination of multiple processors, to execute such instructions. In the present examples, the non-transitory machine-readable storage medium may store instructions that, when executed by the processing resource, implement the engine(s) 214. In other examples, the engine(s) 214 may be implemented as electronic circuitry.

In one example, the engine(s) 214 may include a processing engine 218, a model training engine 220, and other engine(s) 222. The other engine(s) 222 may further implement functionalities that supplement functions performed by the motor health monitoring unit 108 or any of the engine(s) 214.

The data 216 includes data that is either received, stored, or generated as a result of functions implemented by any of the engine(s) 214 or the motor health monitoring unit 108. It may be further noted that information stored and available in the data 216 may be utilized by the engine(s) 214 for performing various functions by the motor health monitoring unit 108. The data 216 may include sensor data 224, previous sensor data 226, historical sensor data 228, and other data 230. The sensor data 224 may be the data sensed by the sensor units 106, at a particular time, in relation to the motor 102 whose health is being monitored by the motor health monitoring unit 108. The previous sensor data 226 may be the data sensed by the sensor units 106, prior to the particular time, in relation to the motor 102. The historical sensor data 228 may be the data sensed by one or more sensor units 106 in relation to one or more previously operated motors. The historical sensor data 228 may be utilized for training a machine learning model such that the trained machine learning model may be utilized for monitoring the health of the motor 102 in real-time. The other data 230 may include the data that is either received, stored, or generated as a result of functions implemented by any of the engine(s) 214 or the motor health monitoring unit 108.

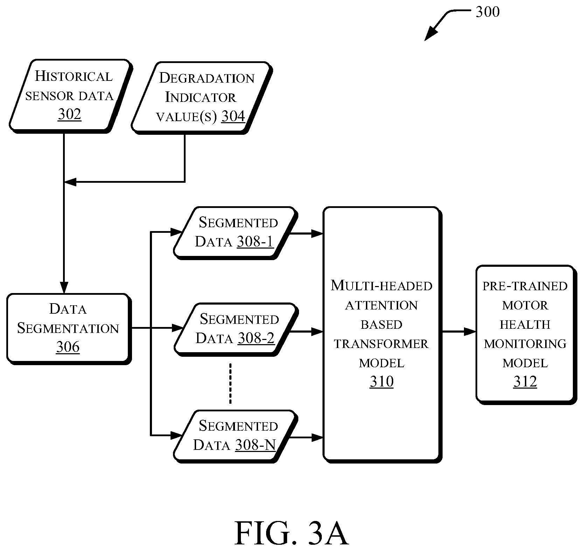

In operation, the model training engine 220 may be configured to obtain a pre-trained motor health monitoring model. Once the pre-trained motor health monitoring model is obtained by the model training engine 220, the pre-trained motor health monitoring model may be implemented by the motor health monitoring unit 108 to monitor the health of the motor 102 that is operating in real-time. The operation of the model training engine 220 has been explained in detail with reference to FIG. 3A to FIG. 3C.

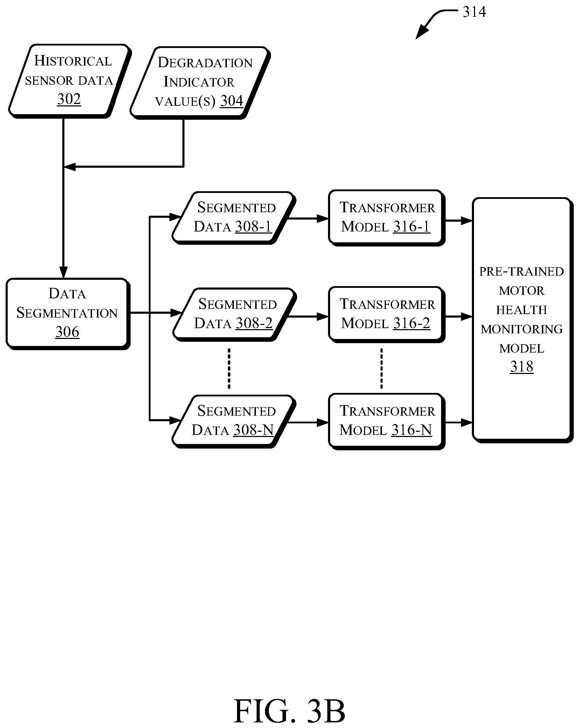

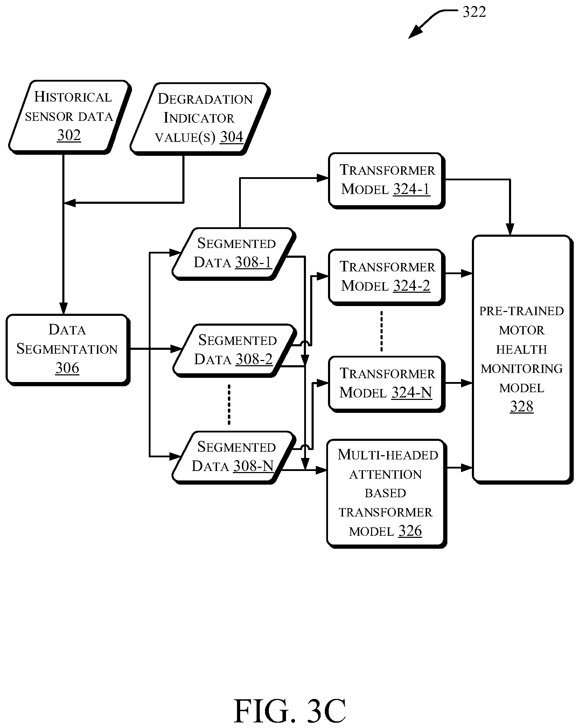

FIG. 3A to FIG. 3C illustrate different training techniques that may be utilized to obtain the pre-trained motor health monitoring model for monitoring the health of the motor 102, according to an example. In one example, the model training engine 220 may obtain the pre-trained motor health monitoring model using an early multimodality fusion technique, as illustrated in FIG. 3A. In another example, the model training engine 220 may obtain the pre-trained motor health monitoring model using a late multimodality fusion technique, as illustrated in FIG. 3B. In another example, the model training engine 220 may obtain the pre-trained motor health monitoring model using a hybrid multimodality fusion technique, as illustrated in FIG. 3C.

In the training techniques illustrated in FIG. 3A to FIG. 3C, initially, at blocks 302, 304, 306, and 308, the historical sensor data 228 is pre-processed. Pre-processed historical sensor data, thus generated, is then utilized differently in FIG. 3A, FIG. 3B, and FIG. 3C, respectively, for training one or more machine learning models and obtain the pre-trained motor health monitoring model.

In the training techniques illustrated in FIG. 3A to FIG. 3C, initially, at block 302, the model training engine 220 may obtain historical sensor data 228 associated with one or more previously operated motors. In an example, the historical sensor data 228 may be sensed by one or more sensor units installed proximate to the one or more previously operated motors. The one or more sensor units may be similar to the sensor units 106 installed proximate to the motor 102. In an example, the historical sensor data 228 may be time-stamped based on the time at which the historical sensor data 228 was sensed by the one or more sensor units. In an example, the historical sensor data 228 may be obtained from the memory 210. The historical sensor data 228 may be pre-stored in the memory 210. In another example, the historical sensor data 228 may be obtained directly from the one or more sensor units installed proximate to the one or more previously operated motors.

In an example, each previously operated motor of the one or more previously operated motors may be associated with a corresponding health degradation cause. The corresponding health degradation cause may indicate an issue that was historically faced by the previously operated motor. For example, the previously operated motor may have had cooling issues, alignment issues, bearing issues, etc. The time-stamped historical sensor data 228 may include corresponding values of a plurality of operating parameters recorded at the time of occurrence of the corresponding health degradation cause. For a motor, examples of the plurality of operating parameters may include, but are not limited to, a temperature value of the motor, a vibration value of the motor, an acceleration value of the motor, and a motor operating status. For a motor, examples of the plurality of operating parameters may include, but are not limited to, an operating voltage value associated with the motor and an operating current value associated with the motor.

Once the time-stamped historical sensor data 228 is obtained, in the training techniques illustrated in FIG. 3A to FIG. 3C, at block 304, for each differently timed historical sensor data from the time-stamped historical sensor data 228 of the previously operated motor, the model training engine 220 may process the differently timed historical sensor data to determine a corresponding value of one or more degradation indicators. For a motor, examples of the one or more degradation indicators may include, but are not limited to, a rate of acceleration of the motor, a minimum temperature value of the motor, an average temperature value of the motor, a maximum temperature value of the motor, a vibration amplitude for the motor, a vibration frequency for the motor, and frequency and duration of on-off cycles for the motor.

Subsequently, in the training techniques illustrated in FIG. 3A to FIG. 3C, at block 306, the time-stamped historical sensor data 228 may be segmented into one or more segmented data 308-1, 308-2,..., 308-N, where N is a natural number. The one or more segmented data 308-1, 308-2,..., 308-N may be individually referred to as segmented data 308 and collectively referred to as particular segmented data 308. The particular segmented data 308 may include a subset of the time-stamped historical sensor data 228.

For the data segmentation at block 306, the model training engine 220 may analyze the differently timed historical sensor data, for each differently timed historical sensor data, to identify a historical operating condition of the previously operated motor at the time of recording of the differently timed historical data. In an example, for a previously operated motor, the historical operating condition may be indicative of whether the previously operated motor was operating or not at the time of recording of the differently timed historical data. Further, for a previously operated motor, the operating condition may be indicative of whether the previously operated motor was in a transient operation or a steady-state operation while the previously operated motor was operating at the time of recording of the differently timed historical data. The previously operated motor may be said to operate in the transient operation when the time of recording of the differently timed historical data lies in a short period of time immediately after the motor operating status changes from ON to OFF or from OFF to ON. The previously operated motor may be said to operate in the steady-state operation when the time of recording of the differently timed historical data lies in a time other than the short period of time while the previously operated motor is operating.

Further, for the data segmentation at block 306, once the historical operating condition is identified, for each differently timed historical sensor data, the model training engine 220 may assign a particular operating condition tag, from amongst a plurality of pre-defined operating condition tags, to the differently timed historical sensor data based on the historical operating condition. Each of the plurality of pre-defined operating condition tags may be indicative of a unique historical operating condition associated with the previously operated motor. For example, when the previously operated motor faced abnormal variations in the vibration value while operating in the steady-state operation, an example operating condition tag that may be assigned to the differently timed historical sensor data may be "steady-state operation with variable vibration". Similarly, different operating condition tags may be defined for different historical operating conditions of the previously operated motors. For example, when the operating parameters that are sensed for a previously operated motor are the temperature value, the vibration value, the acceleration value, and the motor operating status, examples of the plurality of pre-defined operating condition tags may include, but are not limited to, a baseline behaviour, a steady-state operation with variable temperature, a steady-state operation with variable vibration, a steady-state operation with variable acceleration, a transient operation with changes in the motor operating status, and a transient operation with simultaneous changes in temperature, vibration, and acceleration.

The baseline behavior may indicate that the previously operated motor was not operating at the time of recording of the differently timed historical sensor data. The steady-state operation with variable temperature may indicate that the previously operated motor was in the steady-state operation and had abnormal variations in the temperature value at the time of recording of the differently timed historical sensor data. The steady-state operation with variable vibration may indicate that the previously operated motor was in the steady-state operation and had abnormal variations in the vibration value at the time of recording of the differently timed historical sensor data. The steady-state operation with variable acceleration may indicate that the previously operated motor was in the steady-state operation and had abnormal variations in the acceleration value at the time of recording of the differently timed historical sensor data. The transient operation with changes in the motor operating status may indicate that the previously operated motor was in the transient operation due to change only in the motor operating status at the time of recording of the differently timed historical sensor data. The transient operation with simultaneous changes in temperature, vibration, and acceleration may indicate that the previously operated motor was in the transient operation and had abnormal variations in at least one of the temperature value, the vibration value, and the acceleration value at the time of recording of the differently timed historical sensor data.

The differently timed historical sensor data that is assigned the particular operating condition tag may form a part of the particular segmented data 308. For example, each differently timed historical sensor data that is assigned a particular operating condition tag "baseline behavior" may collectively form segmented data 308-1. Similarly, each differently timed historical sensor data that is assigned a particular operating condition tag "steady-state operation with variable temperature" may collectively form segmented data 308-2. Thus, there may be N number of segmented data 308 based on the operating condition tag assigned to the differently timed historical sensor data.

Once the segmented data is formed, the pre-processing of the historical sensor data 228 is complete. The segmented data 308 is then utilized to train one or more machine learning models to obtain the pre-trained motor health monitoring unit according to different training techniques illustrated in FIG. 3A to FIG. 3C.

According to the early multimodality fusion technique illustrated in FIG. 3A, at block 310, the segmented data 308 may be used to train a multi-headed attention based transformer model to obtain a pre-trained motor health monitoring model 312. In an example, at block 310, the model training engine 220 may train the multi-headed attention based transformer model based on the one or more degradation indicators, the corresponding health degradation cause, and the differently timed historical data corelated with each particular operating condition tag of the plurality of pre-defined operating condition tags to obtain the pre-trained motor health monitoring model 312. By training the multi-headed attention based transformer model as described, the pre-trained motor health monitoring model 312 may be able to form a correlation between the corresponding health degradation cause, the historical operating condition at the time of the corresponding health degradation cause, and the historical sensor data. As a result, the pre-trained motor health monitoring model 312 may be implemented by the motor health monitoring unit 108 for monitoring the health of the motor 102 operating in real-time.

According to the late multimodality fusion technique illustrated in FIG. 3B, at respective block 316-1, 316-2,...316-N (collectively referred to as blocks 316 and individually referred to as block 316), the particular segmented data 308 may be used to train a transformer model. Outputs of the transformer models trained at blocks 316 may be combined using ensemble techniques such as weighing sum or stacking to form a pre-trained motor health monitoring model 318. Combining the outputs of the transformer models may improve the accuracy of the anomaly interpretation and the maintenance recommendation generated by the pre-trained motor health monitoring model 318 in case of degradation of the motor 102 during monitoring of the motor's health. In an example, at block 316, for each particular operating condition tag of the plurality of pre-defined operating condition tags, the model training engine 220 may train a transformer model based on the one or more degradation indicators, the corresponding health degradation cause, and the differently timed historical data corelated with the particular operating condition tag to obtain a corresponding pre-trained operating condition model. Further, the model training engine 220 may obtain the pre-trained motor health monitoring model 318 utilizing at least one of weighting sum and stacking the corresponding pre-trained operating condition model of each particular operating condition tag of the plurality of pre-defined operating condition tags. An example ensemble technique utilizing a meta model may be used for the stacking. The meta model may be especially trained to optimally combine various models.

In an example, for the weighing sum, the model training engine 220 may assign a corresponding weightage to the corresponding pre-trained operating condition model of each of the particular operating condition tag. In an example, the corresponding weightage may be assigned based on at least one of a performance metric of the corresponding pre-trained operating condition model, domain knowledge related to the operating parameters associated with the motor 102, and quality of the historical sensor data based on which the corresponding pre-trained operating condition model is trained. For instance, models that show higher performance, in terms of accuracy or similar performance metrics, during validation may be assigned higher weightage than other models. Further, the corresponding weightage may be assigned based on a pre-determined criticality of the operating parameters associated with the motor 102. In an example, the pre-determined criticality may be derived based on domain knowledge about the motor 102 or inputs from a user. For instance, if vibration of the motor 102 has a higher chance of degrading the health of the motor 102 than other operating parameters, then the models obtained for the particular operating condition tag that is associated with vibration may be assigned a higher weightage in comparison to other models. Based on the corresponding weightage, the model training engine 220 may obtain the pre-trained motor health monitoring model 318 utilizing the weighting sum technique.

According to the hybrid multimodality fusion technique illustrated in FIG. 3C, at respective block 324-1, 324-2, ..., 324-N (collectively referred to as blocks 324 and individually referred to as block 324), the particular segmented data 308 may be used to train a transformer model. Further, at block 326, the segmented data 308 may be used to train a multi-headed attention based transformer model. Outputs of the transformer models trained at blocks 324 and the multi-headed attention based transformer model trained at block 326 may be combined using ensemble techniques such as weighing sum or stacking to form a pre-trained motor health monitoring model 328. Combining the outputs may improve the accuracy of the anomaly interpretation and the maintenance recommendation generated by the pre-trained motor health monitoring model 328 in case of degradation of the motor 102 during monitoring of the motor's health. In an example, at block 324, for each particular operating condition tag of the plurality of pre-defined operating condition tags, the model training engine 310 may train a transformer model based on the one or more degradation indicators, the corresponding health degradation cause, and the differently timed historical data corelated with the particular operating condition tag to obtain a corresponding pre-trained operating condition model. Further, at block 326, the model training engine 220 may train the multi-headed attention based transformer model based on the one or more degradation indicators, the corresponding health degradation cause, and the differently timed historical data corelated with each particular operating condition tag of the plurality of pre-defined operating condition tags to obtain a multi-headed pre-trained model. Further, the model training engine 220 may obtain the pre-trained motor health monitoring model 328 utilizing at least one of weighting sum and stacking the multi-headed pre-trained model and the corresponding pre-trained operating condition model of each particular operating condition tag of the plurality of pre-defined operating condition tags. An example ensemble technique utilizing a meta model may be used for the stacking. The meta model may be especially trained to optimally combine various models.

In an example, for the weighing sum, the model training engine 220 may assign a corresponding weightage to the multi-headed pre-trained model and the corresponding pre-trained operating condition model of each of the particular operating condition tag. In an example, the corresponding weightage may be assigned based on at least one of a performance metric of the multi-headed pre-trained model and the corresponding pre-trained operating condition model, domain knowledge related to the operating parameters associated with the motor 102, and quality of the historical sensor data based on which the corresponding pre-trained operating condition model and the multi-headed pre-trained model are trained. For instance, models that show higher performance, in terms of accuracy or similar performance metrics, during validation may be assigned higher weightage than other models. Further, the corresponding weightage may be assigned based on a pre-determined criticality of the operating parameters associated with the motor 102. In an example, the pre-determined criticality may be derived based on domain knowledge about the motor 102 or inputs from a user. For instance, if vibration of the motor 102 has a higher chance of degrading the health of the motor 102 than other operating parameters, then the models obtained for the particular operating condition tag that is associated with vibration may be assigned a higher weightage in comparison to other models. Based on the corresponding weightage, the model training engine 220 may obtain the pre-trained motor health monitoring model 328 utilizing the weighting sum technique.

Once a pre-trained motor health monitoring model is obtained using any of the training techniques described with reference to FIG. 3A to FIG. 3C, the pre-trained motor health monitoring model may be implemented by the motor health monitoring unit 108 for monitoring the health of the motor 102.

Moving back to FIG. 2, for monitoring the health of the motor 102, in operation, the sensor units 106 may be configured to sense operating conditions of the motor 102 and generate the sensor data in relation to the motor 102. In an example, the sensor units 106 may be configured to sense the sensor data in real-time. In an example, the sensor data may include a corresponding value of one or more operating parameters from amongst the plurality of operating parameters associated with the motor 102. The sensor units 106 may transmit the sensor data to the motor health monitoring unit 108 over the communication network 204. In an example, the sensor units 106 may transmit the sensor data to the motor health monitoring unit 108 periodically.

The communication module 212 of the motor health monitoring unit 108 may receive the sensor data in relation to the motor 102 from the sensor units 106. The sensor data may be measured by the sensor units 106 at a particular time. In an example, the received sensor data may be saved in the sensor data 224 for further processing.

Subsequently, the processing engine 218 of the motor health monitoring unit 108 may implement the pre-trained motor health monitoring model to process the sensor data. The processing engine 218 may process the sensor data to detect an anomaly in relation to an operating parameter of the one or more operating parameters. Examples of the anomaly may include, but are not limited to, excessive vibration, consistently high temperature, and sudden high acceleration.

In an example, for processing the sensor data to detect the anomaly, the processing engine 218 may obtain previous sensor data in relation to the motor 102. The previous sensor data may include a corresponding value of the one or more operating parameters at a time prior to the particular time. In an example, the previous sensor data may be pre-stored in the memory 210 of the motor health monitoring unit 108 as the previous sensor data 226. Further, for processing the sensor data to detect the anomaly, the processing engine 218 may process the sensor data and the previous sensor data to determine a corresponding value of one or more degradation indicators associated with the one or more operating parameters. Examples of the one or more degradation indicators may include, but are not limited to, a rate of acceleration of the motor 102, a minimum temperature value of the motor 102, an average temperature value of the motor 102, a maximum temperature value of the motor 102, a vibration amplitude for the motor 102, a vibration frequency for the motor 102, and frequency and duration of on-off cycles for the motor 102.

The processing engine 218 may analyze the one or more degradation indicators to detect the anomaly in relation to the operating parameter. For example, jerks or sudden change in the rate of acceleration, excessive fluctuation in the temperature value, etc., may be considered as anomalies.

Upon detecting the anomaly, the processing engine 218 may identify an operating condition of the motor 102 at the particular time. The processing engine 218 may implement the pre-trained motor health monitoring model to identify the operating condition. In an example, the operating condition of the motor 102 may be indicative of whether the motor 102 was operating or not at the particular time. Further, the operating condition of the motor 102 may be indicative of whether the motor 102 was in a transient operation or a steady-state operation while the motor 102 was operating at the particular time. The motor 102 may be said to operate in the transient operation when the particular time lies in a short period of time immediately after the motor operating status changes from ON to OFF or from OFF to ON. The motor 102 may be said to operate in the steady-state operation when the particular time lies in a time other than the short period of time while the motor 102 is operating.

Subsequently, the processing engine 218 may assign an operating condition tag, from amongst the plurality of pre-defined operating condition tags, to the sensor data. The operating condition tag may be assigned based on the operating condition. Each of the plurality of pre-defined operating condition tags may be indicative of a unique operating condition associated to the motor 102. In an example, the plurality of pre-defined operating condition tags may be pre-configured based on the plurality of operating parameters. In an example, the one or more operating parameters may include at least a motor operating status in relation to the motor 102. Thus, the operating condition may be identified at least based on the motor operating status. In other words, the plurality of pre-defined operating condition tags may be decided based on the operating parameters which are sensed for a particular motor. For example, when the operating parameters that are sensed for a motor are the temperature value, the vibration value, the acceleration value, and the motor operating status, examples of the plurality of pre-defined operating condition tags may include, but are not limited to, the baseline behaviour, the steady-state operation with variable temperature, the steady-state operation with variable vibration, the steady-state operation with variable acceleration, the transient operation with changes in the motor operating status, and the transient operation with simultaneous changes in temperature, vibration, and acceleration, as described with reference to FIG. 1.

Once the operating condition tag is assigned to the sensor data, the processing engine 218 may process the sensor data and the operating condition tag to generate an anomaly interpretation for presenting to a user. In an example, the the processing engine 218 may implement the pre-trained motor health monitoring model to generate the anomaly interpretation. The anomaly interpretation may be indicative of the anomaly in the operating parameter during the operating condition. The anomaly interpretation may be used for predicting a specific maintenance requirement for the motor 102. The anomaly interpretation may specifically provide information to the user about the degradation of the motor's health in terms of the operating parameter in which the anomaly is detected and the conditions under which such anomaly is detected. For instance, an example of the anomaly interpretation may be "The motor's health is degrading due to excessive vibration during transient operation.". Since the primary operating parameter which is resulting in degradation is tied with the operating condition of the motor 102, the user can easily and accurately understand the underlying cause of the degradation of the motor 102 and predict the specific maintenance requirement for the motor 102.

In an example, the communication module 212 of the motor health monitoring unit 108 may transmit the anomaly representation to the user device 202. The communication module 212 may transmit the anomaly representation to the user device 202 over the communication network 204. The user device 202 may receive the anomaly representation and may present the anomaly representation to the user on a display (not illustrated in figures) of the user device 202.

In an example, the processing engine 218 may further process the anomaly interpretation to generate a maintenance recommendation for presenting to the user. In an example, the processing engine 218 may implement the pre-trained motor health monitoring model to generate the maintenance recommendation. The maintenance recommendation may indicate the specific maintenance requirement for the motor 102. For instance, for an example anomaly interpretation "The motor's health is degrading due to excessive vibration during transient operation", an example maintenance recommendation may be "Consider inspecting the motor for misalignment or bearing issues".

Another example of the anomaly interpretation may be "The motor's health is deteriorating because of consistently high temperatures during steady-state operation with constant acceleration". In this case, an example maintenance recommendation may be "There may be a cooling issue, and it is recommended to inspect the cooling system or ventilation".

Another example of the anomaly interpretation may be "The motor's health is affected by a pattern of off-state operations followed by sudden high acceleration, which could cause unnecessary stress on the motor components". In this case, an example maintenance recommendation may be "reviewing the motor's usage patterns and implementing a more gradual acceleration process after off-states is recommended".

In an example, the communication module 212 of the motor health monitoring unit 108 may transmit the maintenance recommendation to the user device 202. The communication module 212 may transmit the maintenance recommendation to the user device 202 over the communication network 204. The user device 202 may receive the maintenance recommendation and may present the maintenance recommendation to the user on a display (not illustrated in figures) of the user device 202.

Thus, as described, the motor health monitoring unit 108 may monitor the health of the motor 102 and may provide the anomaly interpretation and maintenance recommendation to the user in case the health of the motor 102 is degrading due to any issue. The user is accordingly enabled to timely service the motor 102 to prevent complete degradation of the motor 102.

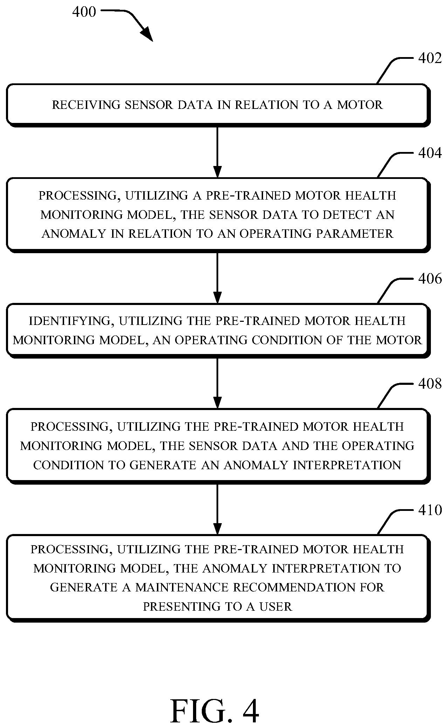

FIG. 4 to FIG. 9 illustrate example methods 400, 500, 600, 700, 800, and 900, respectively, for monitoring health of a motor, say the motor 102. The order in which the methods are described is not intended to be construed as a limitation, and any number of the described method blocks may be combined in any order to implement the methods, or an alternative method. Further, the methods 400, 500, 600, 700, 800, and 900 may be implemented by processing resource or computing device(s) through any suitable hardware, non-transitory machine-readable instructions, or combination thereof.

It may also be understood that methods 400, 500, 600, 700, 800, and 900 may be performed by programmed computing devices, such as the motor health monitoring unit 108, as depicted in FIG. 1 and FIG. 2. Furthermore, the methods 400, 500, 600, 700, 800, and 900 may be executed based on instructions stored in a non-transitory computer readable medium, as will be readily understood. The non-transitory computer readable medium may include, for example, digital memories, magnetic storage media, such as one or more magnetic disks and magnetic tapes, hard drives, or optically readable digital data storage media. While the methods 400, 500, 600, 700, 800, and 900 are described below with reference to the motor health monitoring unit 108 and the system 104 as described above; other suitable systems for the execution of these methods may also be utilized. Additionally, implementation of the methods 400, 500, 600, 700, 800, and 900 is not limited to such examples.

FIG. 4 illustrates the method 400 for monitoring health of a motor, according to an example.

At block 402, sensor data may be received in relation to the motor, say the motor 102, from one or more sensor units, say the sensor units 106. In one example, the sensor data may be measured by the one or more sensor units at a particular time. The one or more sensor units may be individually referred to as a sensor unit and collectively referred to as sensor units. In an example, the sensor data may include a corresponding value of one or more operating parameters from amongst a plurality of operating parameters associated with the motor. Examples of the plurality of operating parameters may include, but are not limited to, a temperature value of the motor, a vibration value of the motor, an acceleration value of the motor, and a motor operating status. Examples of the plurality of operating parameters may include, but are not limited to, an operating voltage value associated with the motor and an operating current value associated with the motor.

At block 404, the sensor data may be processed to detect an anomaly in relation to an operating parameter of the one or more operating parameters. In an example, the sensor data may be processed utilizing a pre-trained motor health monitoring model. Examples of the anomaly may include, but are not limited to, excessive vibration, consistently high temperature, and sudden high acceleration.

At block 406, upon detecting the anomaly, an operating condition of the motor at the particular time may be identified. In an example, the operating condition may be identified utilizing the pre-trained motor health monitoring model. In an example, the operating condition of the motor may be indicative of whether the motor was operating or not at the particular time. Further, the operating condition of the motor may be indicative of whether the motor was in a transient operation or a steady-state operation while the motor was operating at the particular time. The motor may be said to operate in the transient operation when the particular time lies in a short period of time immediately after the motor operating status changes from ON to OFF or from OFF to ON. The motor may be said to operate in the steady-state operation when the particular time lies in a time other than the short period of time while the motor is operating.

At block 408, the sensor data and the operating condition may be processed to generate an anomaly interpretation for presenting to a user. In an example, the sensor data and the operating condition may be processed utilizing the pre-trained motor health monitoring model. In an example, the anomaly interpretation may be indicative of the anomaly in the operating parameter during the operating condition. The anomaly interpretation may be used for predicting a specific maintenance requirement for the motor. The anomaly interpretation may specifically provide information to the user about the degradation of the motor's health in terms of the operating parameter in which the anomaly is detected and the conditions under which such anomaly is detected. For instance, an example of the anomaly interpretation may be "The motor's health is degrading due to excessive vibration during transient operation.". Since the primary operating parameter which is resulting in degradation is tied with the operating condition of the motor, the user can easily and accurately understand the underlying cause of the degradation of the motor and predict the specific maintenance requirement for the motor.

At block 410, the anomaly interpretation may be processed to generate a maintenance recommendation for presenting to the user. In an example, the anomaly interpretation may be processed utilizing the pre-trained motor health monitoring model. The maintenance recommendation may indicate the specific maintenance requirement for the motor. For instance, for an example anomaly interpretation "The motor's health is degrading due to excessive vibration during transient operation", an example maintenance recommendation may be "Consider inspecting the motor for misalignment or bearing issues".

Another example of the anomaly interpretation may be "The motor's health is deteriorating because of consistently high temperatures during steady-state operation with constant acceleration". In this case, an example maintenance recommendation may be "There may be a cooling issue, and it is recommended to inspect the cooling system or ventilation".

Another example of the anomaly interpretation may be "The motor's health is affected by a pattern of off-state operations followed by sudden high acceleration, which could cause unnecessary stress on the motor components". In this case, an example maintenance recommendation may be "Reviewing the motor's usage patterns and implementing a more gradual acceleration process after off-states is recommended".

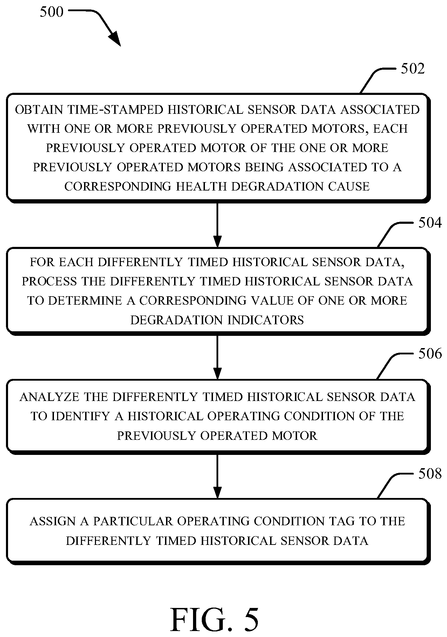

FIG. 5 illustrates the method 500 for pre-processing historical sensor data for being used during training of a pre-trained motor health monitoring model for monitoring health of a motor, according to another example.

At block 502, time-stamped historical sensor data associated with one or more previously operated motors may be obtained. In an example, the time-stamped historical sensor data may be time-stamped based on the time at which the historical sensor data was sensed by one or more sensor units installed proximate to the one or more previously operated motors. In an example, each previously operated motor of the one or more previously operated motors may be associated with a corresponding health degradation cause. The corresponding health degradation cause may indicate an issue that was historically faced by the previously operated motor. For example, the previously operated motor may have had cooling issues, alignment issues, bearing issues, etc. The time-stamped historical sensor data may include corresponding values of a plurality of operating parameters recorded at the time of occurrence of the corresponding health degradation cause. For a motor, examples of the plurality of operating parameters may include, but are not limited to, a temperature value of the motor, a vibration value of the motor, an acceleration value of the motor, and a motor operating status. For a motor, examples of the plurality of operating parameters may include, but are not limited to, an operating voltage value associated with the motor and an operating current value associated with the motor.

At block 504, for each differently timed historical sensor data from the time-stamped historical sensor data of the previously operated motor, the differently timed historical sensor data may be processed to determine a corresponding value of one or more degradation indicators. For a motor, examples of the one or more degradation indicators may include, but are not limited to, a rate of acceleration of the motor, a minimum temperature value of the motor, an average temperature value of the motor, a maximum temperature value of the motor, a vibration amplitude for the motor, a vibration frequency for the motor, and frequency and duration of on-off cycles for the motor.

At block 506, for each differently timed historical sensor data, the differently timed historical sensor data may be analyzed to identify a historical operating condition of the previously operated motor at the time of recording of the differently timed historical data. In an example, for a previously operated motor, the historical operating condition may be indicative of whether the previously operated motor was operating or not at the time of recording of the differently timed historical data. Further, for a previously operated motor, the operating condition may be indicative of whether the previously operated motor was in a transient operation or a steady-state operation while the previously operated motor was operating at the time of recording of the differently timed historical data. The previously operated motor may be said to operate in the transient operation when the time of recording of the differently timed historical data lies in a short period of time immediately after the motor operating status changes from ON to OFF or from OFF to ON. The previously operated motor may be said to operate in the steady-state operation when the time of recording of the differently timed historical data lies in a time other than the short period of time while the previously operated motor is operating.

At block 508, for each differently timed historical sensor data, a particular operating condition tag, from amongst a plurality of pre-defined operating condition tags, may be assigned to the differently timed historical sensor data. In an example, the particular operating condition tag may be assigned based on the historical operating condition. Each of the plurality of pre-defined operating condition tags may be indicative of a unique historical operating condition associated with the previously operated motor. For example, when the previously operated motor faced abnormal variations in the vibration value while operating in the steady-state operation, an example operating condition tag that may be assigned to the differently timed historical sensor data may be "steady-state operation with variable vibration". Similarly, different operating condition tags may be defined for different historical operating conditions of the previously operated motors. For example, when the operating parameters that are sensed for a previously operated motor are the temperature value, the vibration value, the acceleration value, and the motor operating status, examples of the plurality of pre-defined operating condition tags may include, but are not limited to, a baseline behaviour, a steady-state operation with variable temperature, a steady-state operation with variable vibration, a steady-state operation with variable acceleration, a transient operation with changes in the motor operating status, and a transient operation with simultaneous changes in temperature, vibration, and acceleration.

The baseline behavior may indicate that the previously operated motor was not operating at the time of recording of the differently timed historical sensor data. The steady-state operation with variable temperature may indicate that the previously operated motor was in the steady-state operation and had abnormal variations in the temperature value at the time of recording of the differently timed historical sensor data. The steady-state operation with variable vibration may indicate that the previously operated motor was in the steady-state operation and had abnormal variations in the vibration value at the time of recording of the differently timed historical sensor data. The steady-state operation with variable acceleration may indicate that the previously operated motor was in the steady-state operation and had abnormal variations in the acceleration value at the time of recording of the differently timed historical sensor data. The transient operation with changes in the motor operating status may indicate that the previously operated motor was in the transient operation due to change only in the motor operating status at the time of recording of the differently timed historical sensor data. The transient operation with simultaneous changes in temperature, vibration, and acceleration may indicate that the previously operated motor was in the transient operation and had abnormal variations in at least one of the temperature value, the vibration value, and the acceleration value at the time of recording of the differently timed historical sensor data.

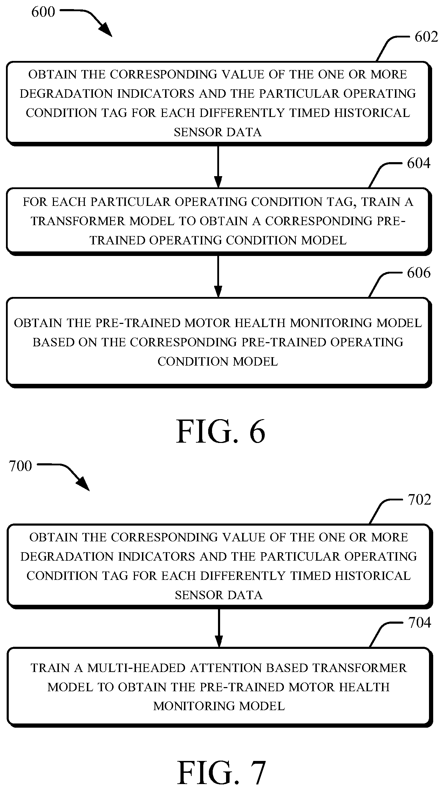

FIG. 6 to FIG. 8 illustrate different training methods 600, 700, and 800, respectively, for obtaining the pre-trained motor health monitoring model for monitoring health of the motor utilizing the pre-processed historical sensor data of FIG. 5.

FIG. 6 illustrates a late multimodality fusion technique, according to an example.

At block 602, the corresponding value of the one or more degradation indicators and the particular operating condition tag may be obtained for each differently timed historical sensor data. In an example, the corresponding value of the one or more degradation indicators and the particular operating condition tag may be obtained based on the method 500.

At block 604, for each particular operating condition tag of the plurality of pre-defined operating condition tags, a transformer model may be trained to obtain a corresponding pre-trained operating condition model. In an example, the transformer model may be trained based on the one or more degradation indicators, the corresponding health degradation cause, and the differently timed historical data corelated with the particular operating condition tag.

At block 606, the pre-trained motor health monitoring model may be obtained based on the corresponding pre-trained operating condition model of each particular operating condition tag of the plurality of pre-defined operating condition tags. In an example, the pre-trained motor health monitoring model may be obtained utilizing at least one of weighting sum and stacking the corresponding pre-trained operating condition model of each particular operating condition tag of the plurality of pre-defined operating condition tags. This means that outputs of the transformer models may be combined using ensemble techniques such as weighing sum or stacking to form the pre-trained motor health monitoring model. Combining the outputs of the transformer models may improve the accuracy of the anomaly interpretation and the maintenance recommendation generated by the pre-trained motor health monitoring model in case of degradation of the motor during monitoring of the motor's health. An example ensemble technique utilizing a meta model may be used for the stacking. The meta model may be especially trained to optimally combine various models.

In an example, for the weighing sum, a corresponding weightage may be assigned to the corresponding pre-trained operating condition model of each of the particular operating condition tag. In an example, the corresponding weightage may be assigned based on at least one of a performance metric of the corresponding pre-trained operating condition model, domain knowledge related to the operating parameters associated with the motor, and quality of the historical sensor data based on which the corresponding pre-trained operating condition model is trained. For instance, models that show higher performance, in terms of accuracy or similar performance metrics, during validation may be assigned higher weightage than other models. Further, the corresponding weightage may be assigned based on a pre-determined criticality of the operating parameters associated with the motor. In an example, the pre-determined criticality may be derived based on domain knowledge about the motor or inputs from a user. For instance, if vibration of the motor has a higher chance of degrading the health of the motor than other operating parameters, then the models obtained for the particular operating condition tag that is associated with vibration may be assigned a higher weightage in comparison to other models. Based on the corresponding weightage, the pre-trained motor health monitoring model may be obtained utilizing the weighting sum technique.

FIG. 7 illustrates an early multimodality fusion technique, according to an example.

At block 702, the corresponding value of the one or more degradation indicators and the particular operating condition tag may be obtained for each differently timed historical sensor data. In an example, the corresponding value of the one or more degradation indicators and the particular operating condition tag may be obtained based on the method 500.

At block 704, a multi-headed attention based transformer model may be trained to obtain the pre-trained motor health monitoring model. In an example, the multi-headed attention based transformer model may be trained based on the one or more degradation indicators, the corresponding health degradation cause, and the differently timed historical data corelated with each particular operating condition tag of the plurality of pre-defined operating condition tags.

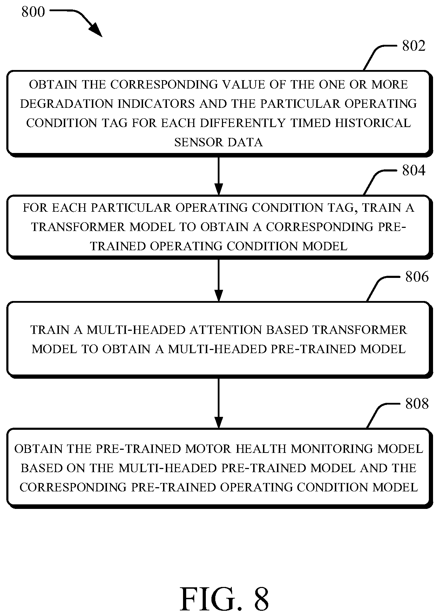

FIG. 8 illustrates a hybrid multimodality fusion technique, according to an example.

At block 802, the corresponding value of the one or more degradation indicators and the particular operating condition tag may be obtained for each differently timed historical sensor data. In an example, the corresponding value of the one or more degradation indicators and the particular operating condition tag may be obtained based on the method 500.

At block 804, for each particular operating condition tag of the plurality of pre-defined operating condition tags, a transformer model may be trained to obtain a corresponding pre-trained operating condition model. In an example, the transformer model may be trained based on the one or more degradation indicators, the corresponding health degradation cause, and the differently timed historical data corelated with the particular operating condition tag.

At block 806, a multi-headed attention based transformer model may be trained to obtain a multi-headed pre-trained model. In an example, the multi-headed attention based transformer model may be trained based on the one or more degradation indicators, the corresponding health degradation cause, and the differently timed historical data corelated with each particular operating condition tag of the plurality of pre-defined operating condition tags.

At block 808, the pre-trained motor health monitoring model may be obtained based on the multi-headed pre-trained model and the corresponding pre-trained operating condition model of each particular operating condition tag of the plurality of pre-defined operating condition tags. In an example, the pre-trained motor health monitoring model may be obtained utilizing at least one of weighting sum and stacking the multi-headed pre-trained model and the corresponding pre-trained operating condition model of each particular operating condition tag of the plurality of pre-defined operating condition tags. This means that outputs of the transformer models and the multi-headed attention based transformer model may be combined using ensemble techniques such as weighing sum or stacking to form the pre-trained motor health monitoring model. Combining the outputs may improve the accuracy of the anomaly interpretation and the maintenance recommendation generated by the pre-trained motor health monitoring model in case of degradation of the motor during monitoring of the motor's health. An example ensemble technique utilizing a meta model may be used for the stacking. The meta model may be especially trained to optimally combine various models.

In an example, for the weighing sum, a corresponding weightage may be assigned to the multi-headed pre-trained model and the corresponding pre-trained operating condition model of each of the particular operating condition tag. In an example, the corresponding weightage may be assigned based on at least one of a performance metric of the multi-headed pre-trained model and the corresponding pre-trained operating condition model, domain knowledge related to the operating parameters associated with the motor, and quality of the historical sensor data based on which the corresponding pre-trained operating condition model and the multi-headed pre-trained model are trained. For instance, models that show higher performance, in terms of accuracy or similar performance metrics, during validation may be assigned higher weightage than other models. Further, the corresponding weightage may be assigned based on a pre-determined criticality of the operating parameters associated with the motor. In an example, the pre-determined criticality may be derived based on domain knowledge about the motor or inputs from a user. For instance, if vibration of the motor has a higher chance of degrading the health of the motor than other operating parameters, then the models obtained for the particular operating condition tag that is associated with vibration may be assigned a higher weightage in comparison to other models. Based on the corresponding weightage, the pre-trained motor health monitoring model may be obtained utilizing the weighting sum technique.

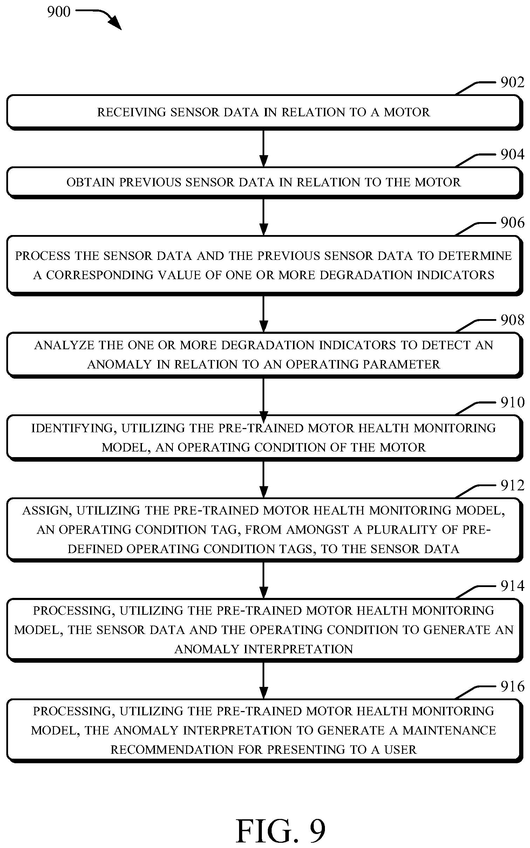

FIG. 9 illustrates the method 900 for monitoring health of a motor utilizing a pre-trained motor health monitoring model, according to an example. The pre-trained motor health monitoring model may be any of the pre-trained motor health monitoring models obtained in FIG. 6 to FIG. 8.

At block 902, sensor data may be received in relation to the motor, say the motor 102, from one or more sensor units, say the sensor units 106. In one example, the sensor data may be measured by the one or more sensor units at a particular time. The one or more sensor units may be individually referred to as a sensor unit and collectively referred to as sensor units. In an example, the sensor data may include a corresponding value of one or more operating parameters from amongst a plurality of operating parameters associated with the motor. Examples of the plurality of operating parameters may include, but are not limited to, a temperature value of the motor, a vibration value of the motor, an acceleration value of the motor, and a motor operating status. Examples of the plurality of operating parameters may include, but are not limited to, an operating voltage value associated with the motor and an operating current value associated with the motor.

At block 904, previous sensor data may be obtained in relation to the motor. The previous sensor data may include a corresponding value of the one or more operating parameters at a time prior to the particular time.

At block 906, the sensor data and the previous sensor data may be processed to determine a corresponding value of one or more degradation indicators associated with the one or more operating parameters. Examples of the one or more degradation indicators may include, but are not limited to, a rate of acceleration of the motor, a minimum temperature value of the motor, an average temperature value of the motor, a maximum temperature value of the motor, a vibration amplitude for the motor, a vibration frequency for the motor, and frequency and duration of on-off cycles for the motor.

At block 908, the one or more degradation indicators may be analyzed to detect an anomaly in relation to an operating parameter of the one or more operating parameters. In an example, the one or more degradation indicators may be analyzed utilizing the pre-trained motor health monitoring model. Examples of the anomaly may include, but are not limited to, excessive vibration, consistently high temperature, and sudden high acceleration. For example, jerks or sudden change in the rate of acceleration, excessive fluctuation in the temperature value, etc., may be considered as anomalies.

At block 910, upon detecting the anomaly, an operating condition of the motor at the particular time may be identified. In an example, the operating condition may be identified utilizing the pre-trained motor health monitoring model. In an example, the operating condition of the motor may be indicative of whether the motor was operating or not at the particular time. Further, the operating condition of the motor may be indicative of whether the motor was in a transient operation or a steady-state operation while the motor was operating at the particular time. The motor may be said to operate in the transient operation when the particular time lies in a short period of time immediately after the motor operating status changes from ON to OFF or from OFF to ON. The motor may be said to operate in the steady-state operation when the particular time lies in a time other than the short period of time while the motor is operating.

At block 912, an operating condition tag, from amongst a plurality of pre-defined operating condition tags, may be assigned to the sensor data. In an example, the operating condition tag may be assigned based on the operating condition. In an example, the operating condition tag may be assigned utilizing the pre-trained motor health monitoring model. Each of the plurality of pre-defined operating condition tags may be indicative of a unique operating condition associated to the motor. In an example, the plurality of pre-defined operating condition tags may be pre-configured based on the plurality of operating parameters. In an example, the one or more operating parameters may include at least a motor operating status in relation to the motor. Thus, the operating condition may be identified at least based on the motor operating status. In other words, the plurality of pre-defined operating condition tags may be decided based on the operating parameters which are sensed for a particular motor. For example, when the operating parameters that are sensed for a motor are the temperature value, the vibration value, the acceleration value, and the motor operating status, examples of the plurality of pre-defined operating condition tags may include, but are not limited to, the baseline behaviour, the steady-state operation with variable temperature, the steady-state operation with variable vibration, the steady-state operation with variable acceleration, the transient operation with changes in the motor operating status, and the transient operation with simultaneous changes in temperature, vibration, and acceleration, as described with reference to FIG. 1.

At block 914, the sensor data and the operating condition may be processed to generate an anomaly interpretation for presenting to a user. In an example, the sensor data and the operating condition may be processed utilizing the pre-trained motor health monitoring model. In an example, the anomaly interpretation may be indicative of the anomaly in the operating parameter during the operating condition. The anomaly interpretation may be used for predicting a specific maintenance requirement for the motor. The anomaly interpretation may specifically provide information to the user about the degradation of the motor's health in terms of the operating parameter in which the anomaly is detected and the conditions under which such anomaly is detected. For instance, an example of the anomaly interpretation may be "The motor's health is degrading due to excessive vibration during transient operation.". Since the primary operating parameter which is resulting in degradation is tied with the operating condition of the motor, the user can easily and accurately understand the underlying cause of the degradation of the motor and predict the specific maintenance requirement for the motor.

At block 916, the anomaly interpretation may be processed to generate a maintenance recommendation for presenting to the user. In an example, the anomaly interpretation may be processed utilizing the pre-trained motor health monitoring model. The maintenance recommendation may indicate the specific maintenance requirement for the motor. For instance, for an example anomaly interpretation "The motor's health is degrading due to excessive vibration during transient operation", an example maintenance recommendation may be "Consider inspecting the motor for misalignment or bearing issues".

Another example of the anomaly interpretation may be "The motor's health is deteriorating because of consistently high temperatures during steady-state operation with constant acceleration". In this case, an example maintenance recommendation may be "There may be a cooling issue, and it is recommended to inspect the cooling system or ventilation".

Another example of the anomaly interpretation may be "The motor's health is affected by a pattern of off-state operations followed by sudden high acceleration, which could cause unnecessary stress on the motor components". In this case, an example maintenance recommendation may be "Reviewing the motor's usage patterns and implementing a more gradual acceleration process after off-states is recommended".

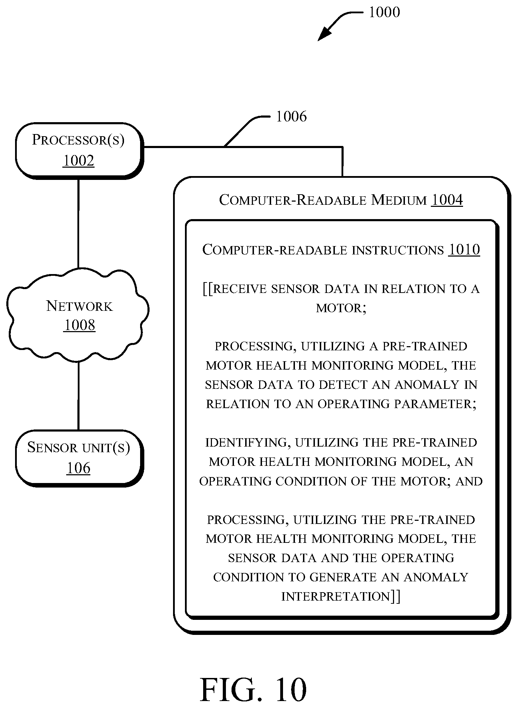

FIG. 10 illustrates a computing environment 1000 implementing a non-transitory computer readable medium for monitoring health of a motor, according to an example. In an example, the computing environment 1000 includes processor(s) 1002 communicatively coupled to a non-transitory computer readable medium 1004 through a communication link 1006. In one example, the communication link 1006 may be similar to the communication network 204, as described in conjunction with the preceding figures. In an example implementation, the computing environment 1000 may be for example, the computing environment 200. In an example, the processor(s) 1002 may have one or more processing resources for fetching and executing computer-readable instructions from the non-transitory computer readable medium 1004. The processor(s) 1002 and the non-transitory computer readable medium 1004 may be implemented, for example, in the motor health monitoring unit 108 (as has been described in conjunction with the preceding figures).

The non-transitory computer readable medium 1004 may be, for example, an internal memory device or an external memory device. In an example implementation, the communication link 1006 may be a network communication link. The processor(s) 1002 and the non-transitory computer readable medium 1004 may also be communicatively coupled to one or more sensor units 106 over a network 1008. The network 1008 may be similar to the communication network 204 described in conjunction with FIG. 2.

In an example implementation, the non-transitory computer readable medium 1004 may include a set of computer readable instructions 1010 which may be accessed by the processor(s) 1002 through the communication link 1006. Referring to FIG. 10, in an example, the non-transitory computer readable medium 1004 may include instructions 1010 that may cause the processor(s) 1002 to receive sensor data in relation to a motor. The sensor data may be received from the one or more sensor units 106. In an example, the one or more sensor units 106 may be installed proximate to the motor. The sensor data may be measured by the one or more sensor units at a particular time. Further, the sensor data may include a corresponding value of one or more operating parameters from amongst a plurality of operating parameters associated with the motor. Examples of the plurality of operating parameters may include, but are not limited to, a temperature value of the motor, a vibration value of the motor, an acceleration value of the motor, and a motor operating status. Examples of the plurality of operating parameters may include, but are not limited to, an operating voltage value associated with the motor and an operating current value associated with the motor.

The instructions 1010 may further cause the processor(s) 1002, in one example, to process the sensor data to detect an anomaly in relation to an operating parameter of the one or more operating parameters. In an example, the sensor data may be processed utilizing a pre-trained motor health monitoring model. Examples of the anomaly may include, but are not limited to, excessive vibration, consistently high temperature, and sudden high acceleration.

In one example, for processing the sensor data to detect the anomaly, the instructions 1010 may cause the processor(s) 1002 to obtain previous sensor data in relation to the motor. The previous sensor data may include a corresponding value of the one or more operating parameters at a time prior to the particular time. The instructions 1010 may further cause the processor(s) 1002 to process the sensor data and the previous sensor data to determine a corresponding value of one or more degradation indicators associated with the one or more operating parameters. Examples of the one or more degradation indicators may include, but are not limited to, a rate of acceleration of the motor, a minimum temperature value of the motor, an average temperature value of the motor, a maximum temperature value of the motor, a vibration amplitude for the motor, a vibration frequency for the motor, and frequency and duration of on-off cycles for the motor. The instructions 1010 may further cause the processor(s) 1002 to analyze the one or more degradation indicators to detect the anomaly in relation to the operating parameter. For example, jerks or sudden change in the rate of acceleration, excessive fluctuation in the temperature value, etc., may be considered as anomalies.

In one example, the instructions 1010 may further cause the processor(s) 1002 to identify an operating condition of the motor at the particular time. The operating condition of the motor may be identified upon detecting the anomaly. The operating condition may be identified utilizing the pre-trained motor health monitoring model. In an example, the one or more operating parameters may include at least a motor operating status in relation to the motor. Thus, the operating condition may be identified at least based on the motor operating status. In an example, the operating condition of the motor may be indicative of whether the motor was operating or not at the particular time. Further, the operating condition of the motor may be indicative of whether the motor was in a transient operation or a steady-state operation while the motor was operating at the particular time. The motor may be said to operate in the transient operation when the particular time lies in a short period of time immediately after the motor operating status changes from ON to OFF or from OFF to ON. The motor may be said to operate in the steady-state operation when the particular time lies in a time other than the short period of time while the motor is operating.

In one example, the instructions 1010 may further cause the processor(s) 1002 to process the sensor data and the operating condition to generate an anomaly interpretation for presenting to a user. In an example, the sensor data and the operating condition may be processed utilizing the pre-trained motor health monitoring model. The anomaly interpretation may be indicative of the anomaly in the operating parameter during the operating condition. The anomaly interpretation may be used for predicting a specific maintenance requirement for the motor. The anomaly interpretation may specifically provide information to the user about the degradation of the motor's health in terms of the operating parameter in which the anomaly is detected and the conditions under which such anomaly is detected. For instance, an example of the anomaly interpretation may be "The motor's health is degrading due to excessive vibration during transient operation.". Since the primary operating parameter which is resulting in degradation is tied with the operating condition of the motor, the user can easily and accurately understand the underlying cause of the degradation of the motor and predict the specific maintenance requirement for the motor.

In an example, prior to generating an anomaly interpretation, an operating condition tag may be assigned to the sensor data. The operating condition tag may be assigned from amongst a plurality of pre-defined operating condition tags based on the operating condition. Each of the plurality of pre-defined operating condition tags may be indicative of a unique operating condition associated to the motor. The plurality of pre-defined operating condition tags may be pre-configured based on the plurality of operating parameters. In an example, the sensor data and the operating condition tag may be processed to generate the anomaly interpretation.

In one example, the instructions 1010 may further cause the processor(s) 1002 to process the anomaly interpretation to generate a maintenance recommendation. In an example, the anomaly interpretation may be processed utilizing the pre-trained motor health monitoring model. The maintenance recommendation may be generated for presenting to the user. In an example, the maintenance recommendation may indicate the specific maintenance requirement for the motor. For instance, for an example anomaly interpretation "The motor's health is degrading due to excessive vibration during transient operation", an example maintenance recommendation may be "Consider inspecting the motor for misalignment or bearing issues".

In one example, the instructions 1010 may cause the processor(s) 1002 to obtain the pre-trained motor health monitoring model for monitoring the health of the motor by different training techniques implemented on pre-processed historical sensor data.

In an example, to obtain the pre-processed historical sensor data, the instructions 1010 may cause the processor(s) 1002 to obtain time-stamped historical sensor data associated with one or more previously operated motors. Each previously operated motor of the one or more previously operated motors may be associated to a corresponding health degradation cause. The corresponding health degradation cause may indicate an issue that was historically faced by the previously operated motor. For example, the previously operated motor may have had cooling issues, alignment issues, bearing issues, etc. The time-stamped historical sensor data may include corresponding values of the plurality of operating parameters recorded at the time of occurrence of the corresponding health degradation cause.

In one example, for each differently timed historical sensor data from the time-stamped historical sensor data of the previously operated motor, the instructions 1010 may cause the processor(s) 1002 to process the differently timed historical sensor data to determine a corresponding value of the one or more degradation indicators.

In one example, for each differently timed historical sensor data, the instructions 1010 may further cause the processor(s) 1002 to analyze the differently timed historical sensor data to identify a historical operating condition of the previously operated motor at the time of recording of the differently timed historical data. In an example, for a previously operated motor, the historical operating condition may be indicative of whether the previously operated motor was operating or not at the time of recording of the differently timed historical data. Further, for a previously operated motor, the operating condition may be indicative of whether the previously operated motor was in a transient operation or a steady-state operation while the previously operated motor was operating at the time of recording of the differently timed historical data. The previously operated motor may be said to operate in the transient operation when the time of recording of the differently timed historical data lies in a short period of time immediately after the motor operating status changes from ON to OFF or from OFF to ON. The previously operated motor may be said to operate in the steady-state operation when the time of recording of the differently timed historical data lies in a time other than the short period of time while the previously operated motor is operating.

In one example, for each differently timed historical sensor data, the instructions 1010 may further cause the processor(s) 1002 to assign a particular operating condition tag to the differently timed historical sensor data based on the historical operating condition. The particular operating condition tag may be assigned from amongst the plurality of pre-defined operating condition tags. Once a corresponding operating condition tag is assigned to each differently timed historical sensor data, the time-stamped historical sensor data may be considered as the pre-processed historical sensor data.

For obtaining the pre-trained motor health monitoring model, in one example, for each particular operating condition tag of the plurality of pre-defined operating condition tags, the instructions 1010 may cause the processor(s) 1002 to train a transformer model to obtain a corresponding pre-trained operating condition model. In an example, the transformer model may be trained based on the one or more degradation indicators, the corresponding health degradation cause, and the differently timed historical data corelated with the particular operating condition tag. Further, the instructions 1010 may cause the processor(s) 1002 to obtain the pre-trained motor health monitoring model utilizing at least one of weighting sum and stacking the corresponding pre-trained operating condition model of each particular operating condition tag of the plurality of pre-defined operating condition tags. This means that outputs of the transformer models may be combined using ensemble techniques such as weighing sum or stacking to form the pre-trained motor health monitoring model. Combining the outputs of the transformer models may improve the accuracy of the anomaly interpretation and the maintenance recommendation generated by the pre-trained motor health monitoring model in case of degradation of the motor during monitoring of the motor's health. An example ensemble technique utilizing a meta model may be used for the stacking. The meta model may be especially trained to optimally combine various models.

In an example, for the weighing sum, the instructions 1010 may cause the processor(s) 1002 to assign a corresponding weightage to the corresponding pre-trained operating condition model of each of the particular operating condition tag. In an example, the corresponding weightage may be assigned based on at least one of a performance metric of the corresponding pre-trained operating condition model, domain knowledge related to the operating parameters associated with the motor, and quality of the historical sensor data based on which the corresponding pre-trained operating condition model is trained. For instance, models that show higher performance, in terms of accuracy or similar performance metrics, during validation may be assigned higher weightage than other models. Further, the corresponding weightage may be assigned based on a pre-determined criticality of the operating parameters associated with the motor. In an example, the pre-determined criticality may be derived based on domain knowledge about the motor or inputs from a user. For instance, if vibration of the motor has a higher chance of degrading the health of the motor than other operating parameters, then the models obtained for the particular operating condition tag that is associated with vibration may be assigned a higher weightage in comparison to other models. Based on the corresponding weightage, the instructions 1010 may cause the processor(s) 1002 to obtain the pre-trained motor health monitoring model utilizing the weighting sum technique.

For obtaining the pre-trained motor health monitoring model, in another example, the instructions 1010 may cause the processor(s) 1002 to train a multi-headed attention-based transformer model based on the one or more degradation indicators, the corresponding health degradation cause, and the differently timed historical data corelated with each particular operating condition tag of the plurality of pre-defined operating condition tags.

For obtaining the pre-trained motor health monitoring model, in another example, for each particular operating condition tag of the plurality of pre-defined operating condition tags, the instructions 1010 may cause the processor(s) 1002 to train a transformer model to obtain a corresponding pre-trained operating condition model. The transformer model may be trained based on the one or more degradation indicators, the corresponding health degradation cause, and the differently timed historical data corelated with the particular operating condition tag. Further, the instructions 1010 may cause the processor(s) 1002 to train a multi-headed attention based transformer model based on the one or more degradation indicators, the corresponding health degradation cause, and the differently timed historical data corelated with each particular operating condition tag of the plurality of pre-defined operating condition tags to obtain a multi-headed pre-trained model. Furthermore, the instructions 1010 may cause the processor(s) 1002 to obtain the pre-trained motor health monitoring model utilizing at least one of weighting sum and stacking the multi-headed pre-trained model and the corresponding pre-trained operating condition model of each particular operating condition tag of the plurality of pre-defined operating condition tags. This means that outputs of the transformer models and the multi-headed attention based transformer model may be combined using ensemble techniques such as weighing sum or stacking to form the pre-trained motor health monitoring model. Combining the outputs may improve the accuracy of the anomaly interpretation and the maintenance recommendation generated by the pre-trained motor health monitoring model in case of degradation of the motor during monitoring of the motor's health. An example ensemble technique utilizing a meta model may be used for the stacking. The meta model may be especially trained to optimally combine various models.

In an example, for the weighing sum, the instructions 1010 may cause the processor(s) 1002 to assign a corresponding weightage to the multi-headed pre-trained model and the corresponding pre-trained operating condition model of each of the particular operating condition tag. In an example, the corresponding weightage may be assigned based on at least one of a performance metric of the multi-headed pre-trained model and the corresponding pre-trained operating condition model, domain knowledge related to the operating parameters associated with the motor, and quality of the historical sensor data based on which the corresponding pre-trained operating condition model and the multi-headed pre-trained model are trained. For instance, models that show higher performance, in terms of accuracy or similar performance metrics, during validation may be assigned higher weightage than other models. Further, the corresponding weightage may be assigned based on a pre-determined criticality of the operating parameters associated with the motor. In an example, the pre-determined criticality may be derived based on domain knowledge about the motor or inputs from a user. For instance, if vibration of the motor has a higher chance of degrading the health of the motor than other operating parameters, then the models obtained for the particular operating condition tag that is associated with vibration may be assigned a higher weightage in comparison to other models. Based on the corresponding weightage, the instructions 1010 may cause the processor(s) 1002 to obtain the pre-trained motor health monitoring model utilizing the weighting sum technique.

Although examples for the present disclosure have been described in language specific to structural features and/or methods, it is to be understood that the appended claims are not necessarily limited to the specific features or methods described. Rather, the specific features and methods are disclosed and explained as examples of the present disclosure.

## Claims

1. A system comprising:
a motor health monitoring unit communicably coupled with one or more sensor units, each of the one or more sensor units being installed proximate to a motor,
the motor health monitoring unit comprising:
a communication module to receive, from the one or more sensor units, sensor data in relation to the motor, the sensor data being measured by the one or more sensor units at a particular time, wherein the sensor data includes a corresponding value of one or more operating parameters from amongst a plurality of operating parameters associated with the motor;
a processing engine implementing a pre-trained motor health monitoring model to:
process the sensor data to detect an anomaly in relation to an operating parameter of the one or more operating parameters;
upon detecting the anomaly, identify an operating condition of the motor at the particular time;
assign an operating condition tag, from amongst a plurality of pre-defined operating condition tags, to the sensor data based on the operating condition, wherein each of the plurality of pre-defined operating condition tags is indicative of a unique operating condition associated to the motor; and
process the sensor data and the operating condition tag to generate an anomaly interpretation for presenting to a user, the anomaly interpretation being indicative of the anomaly in the operating parameter during the operating condition, wherein the anomaly interpretation is to be used for predicting a specific maintenance requirement for the motor.

2. The system of claim 1, wherein the processing engine is to process the anomaly interpretation to generate a maintenance recommendation for presenting to the user, wherein the maintenance recommendation indicates the specific maintenance requirement for the motor.

3. The system of claim 1, wherein the plurality of pre-defined operating condition tags is pre-configured based on the plurality of operating parameters, wherein the one or more operating parameters include at least a motor operating status in relation to the motor, and wherein the operating condition is identified at least based on the motor operating status.

4. The system of claim 1, wherein, for processing the sensor data to detect the anomaly, the processing engine is to:
obtain previous sensor data in relation to the motor, wherein the previous sensor data includes a corresponding value of the one or more operating parameters at a time prior to the particular time;
process the sensor data and the previous sensor data to determine a corresponding value of one or more degradation indicators associated with the one or more operating parameters; and
analyze the one or more degradation indicators to detect the anomaly in relation to the operating parameter.

5. The system of claim 1, wherein the motor health monitoring unit comprises:
a model training engine to:
obtain time-stamped historical sensor data associated with one or more previously operated motors, each previously operated motor of the one or more previously operated motors being associated to a corresponding health degradation cause, wherein the time-stamped historical sensor data includes corresponding values of the plurality of operating parameters recorded at the time of occurrence of the corresponding health degradation cause;
for each differently timed historical sensor data from the time-stamped historical sensor data of the previously operated motor:
process the differently timed historical sensor data to determine a corresponding value of one or more degradation indicators;
analyze the differently timed historical sensor data to identify a historical operating condition of the previously operated motor at the time of recording of the differently timed historical data; and
assign a particular operating condition tag, from amongst the plurality of pre-defined operating condition tags, to the differently timed historical sensor data based on the historical operating condition.

6. The system of claim 5, wherein the model training engine is to:
for each particular operating condition tag of the plurality of pre-defined operating condition tags, train a transformer model based on the one or more degradation indicators, the corresponding health degradation cause, and the differently timed historical data corelated with the particular operating condition tag to obtain a corresponding pre-trained operating condition model; and
obtain the pre-trained motor health monitoring model utilizing at least one of:
weighting sum; and
stacking the corresponding pre-trained operating condition model of each particular operating condition tag of the plurality of pre-defined operating condition tags.

7. The system of claim 5, wherein the model training engine is to:
train a multi-headed attention based transformer model based on the one or more degradation indicators, the corresponding health degradation cause, and the differently timed historical data corelated with each particular operating condition tag of the plurality of pre-defined operating condition tags to obtain the pre-trained motor health monitoring model.

8. The system of claim 5, wherein the model training engine is to:
for each particular operating condition tag of the plurality of pre-defined operating condition tags, train a transformer model based on the one or more degradation indicators, the corresponding health degradation cause, and the differently timed historical data corelated with the particular operating condition tag to obtain a corresponding pre-trained operating condition model;
train a multi-headed attention based transformer model based on the one or more degradation indicators, the corresponding health degradation cause, and the differently timed historical data corelated with each particular operating condition tag of the plurality of pre-defined operating condition tags to obtain a multi-headed pre-trained model; and
obtain the pre-trained motor health monitoring model utilizing at least one of:
weighting sum; and
stacking the multi-headed pre-trained model and the corresponding pre-trained operating condition model of each particular operating condition tag of the plurality of pre-defined operating condition tags.

9. A method comprising:
receiving sensor data in relation to a motor from one or more sensor units installed proximate to the motor, the sensor data being measured by the one or more sensor units at a particular time, wherein the sensor data includes a corresponding value of one or more operating parameters from amongst a plurality of operating parameters associated with the motor;
processing, utilizing a pre-trained motor health monitoring model, the sensor data to detect an anomaly in relation to an operating parameter of the one or more operating parameters;
upon detecting the anomaly, identifying, utilizing the pre-trained motor health monitoring model, an operating condition of the motor at the particular time;
processing, utilizing the pre-trained motor health monitoring model, the sensor data and the operating condition to generate an anomaly interpretation for presenting to a user, the anomaly interpretation being indicative of the anomaly in the operating parameter during the operating condition, wherein the anomaly interpretation is to be used for predicting a specific maintenance requirement for the motor; and
processing, utilizing the pre-trained motor health monitoring model, the anomaly interpretation to generate a maintenance recommendation for presenting to the user, wherein the maintenance recommendation indicates the specific maintenance requirement for the motor.

10. The method of claim 9, wherein, for processing the sensor data to detect the anomaly, the method comprises:
obtaining previous sensor data in relation to the motor, wherein the previous sensor data includes a corresponding value of the one or more operating parameters at a time prior to the particular time;
processing the sensor data and the previous sensor data to determine a corresponding value of one or more degradation indicators associated with the one or more operating parameters; and
analyzing the one or more degradation indicators to detect the anomaly in relation to the operating parameter.

11. The method of claim 9, wherein the method comprises:
obtaining time-stamped historical sensor data associated with one or more previously operated motors, each previously operated motor of the one or more previously operated motors being associated to a corresponding health degradation cause, wherein the time-stamped historical sensor data includes corresponding values of the plurality of operating parameters recorded at the time of occurrence of the corresponding health degradation cause;
for each differently timed historical sensor data from the time-stamped historical sensor data of the previously operated motor:
processing the differently timed historical sensor data to determine a corresponding value of one or more degradation indicators;
analyzing the differently timed historical sensor data to identify a historical operating condition of the previously operated motor at the time of recording of the differently timed historical data; and
assigning a particular operating condition tag, from amongst a plurality of pre-defined operating condition tags, to the differently timed historical sensor data based on the historical operating condition.

12. The method of claim 11, wherein the method comprises:
for each particular operating condition tag of the plurality of pre-defined operating condition tags, training a transformer model based on the one or more degradation indicators, the corresponding health degradation cause, and the differently timed historical data corelated with the particular operating condition tag to obtain a corresponding pre-trained operating condition model; and
obtaining the pre-trained motor health monitoring model utilizing at least one of:
weighting sum; and
stacking the corresponding pre-trained operating condition model of each particular operating condition tag of the plurality of pre-defined operating condition tags.

13. The method of claim 11, wherein the method comprises:
training a multi-headed attention based transformer model based on the one or more degradation indicators, the corresponding health degradation cause, and the differently timed historical data corelated with each particular operating condition tag of the plurality of pre-defined operating condition tags to obtain the pre-trained motor health monitoring model.

14. The method of claim 11, wherein the method is to:
for each particular operating condition tag of the plurality of pre-defined operating condition tags, training a transformer model based on the one or more degradation indicators, the corresponding health degradation cause, and the differently timed historical data corelated with the particular operating condition tag to obtain a corresponding pre-trained operating condition model;
training a multi-headed attention based transformer model based on the one or more degradation indicators, the corresponding health degradation cause, and the differently timed historical data corelated with each particular operating condition tag of the plurality of pre-defined operating condition tags to obtain a multi-headed pre-trained model; and
obtaining the pre-trained motor health monitoring model utilizing at least one of:
weighting sum; and
stacking the multi-headed pre-trained model and the corresponding pre-trained operating condition model of each particular operating condition tag of the plurality of pre-defined operating condition tags.

15. A non-transitory computer-readable medium comprising instructions for monitoring health of a motor, the instructions being executable by a processing resource to:
receive sensor data in relation to a motor from one or more sensor units installed proximate to the motor, the sensor data being measured by the one or more sensor units at a particular time, wherein the sensor data includes a corresponding value of one or more operating parameters from amongst a plurality of operating parameters associated with the motor;
process, utilizing a pre-trained motor health monitoring model, the sensor data to detect an anomaly in relation to an operating parameter of the one or more operating parameters;
upon detecting the anomaly, identify, utilizing the pre-trained motor health monitoring model, an operating condition of the motor at the particular time; and
process, utilizing the pre-trained motor health monitoring model, the sensor data and the operating condition to generate an anomaly interpretation for presenting to a user, the anomaly interpretation being indicative of the anomaly in the operating parameter during the operating condition, wherein the anomaly interpretation is to be used for predicting a specific maintenance requirement for the motor.
